# EUROPÄISCHE PATENTSCHRIFT

(11) **EP 0 429 762 B1**
(45) Veröffentlichungstag und Bekanntmachung des Hinweises auf die Patenterteilung: **04.01.1995**
(21) Anmeldenummer: 90115650.5
(22) Anmeldetag: 16.08.1990
(51) Int. Cl.: F16C 33/61

(54) **Wälzlager**
Rolling contact bearing
Palier à contact de roulement

(30) Priorität: 28.11.1989 DE 3939279
(43) Veröffentlichungstag der Anmeldung: 05.06.1991
(73) Patentinhaber: Franke & Heydrich KG, D-73431 Aalen (DE); KMF MASCHINENFABRIK GMBH, D-73441 Bopfingen (DE)
(72) Erfinder: Franke, Egon, D-7080 Aalen (DE); Basener, Helmut, D-7080 Aalen (DE)
(74) Vertreter: Fay, Hermann, Dipl.-Phys. Dr.

(56) Entgegenhaltungen:
- DE-A- 2 139 849
- DE-A- 2 729 354
- DE-A- 3 512 711
- DE-C- 1 174 970

## Beschreibung

Die Erfindung betrifft ein Wälzlager als Radial- und/oder Axiallager, bei dem die Wälzkörper sich an Laufbahnen abwälzen, die an je in einem Laufringbett liegenden Laufringen ausgebildet sind, welche aus an ihren Enden, gegebenenfalls in einem schmalen Toleranzspalt, zusammenstoßenden Laufdrähten bestehen und welche in Lagernuten beidseits der Lagerteilung angeordnet werden können, und wobei aus Kunststoff bestehende Futterringe vorgesehen sind, die in Lagernuten zwischen den Laufringen und der Nutwandung legbar sind, die radial und axial an der Wandung der Lagernuten abstützbar sind, die an ihrer den Laufringen zugewandten Seite mit den Laufringbetten versehen sind, und mindestens je eine in Ringrichtung verlaufende Halterung für einen aus Draht bestehenden und umfangsmäßig ebenfalls in einem Stoß offenen Federring aufweisen, der in zur Lagerachse radialer Richtung formschlüssig in der Halterung sitzt.

Wälzlager dieser Art sind aus DE 21 39 849 A1 bekannt, und für Einsatzzwecke vorgesehen, die kleine, schnellaufende und wenig belastete Lager mit geringen Genauigkeitsansprüchen erfordern, bei denen sämtliche Teile, also auch die Futterringe, aus Kunststoff gefertigt sind. Die in Umfangsrichtung jeweils einstückigen Futterringe weisen keine Mittel zu einer gegenseitigen Festlegung ihrer Position auf.

Ebenso sind aus DE 35 12 711 A1 Wälzlager bekannt, bei denen die Futterringe sich mit ihren Laufringbetten geometrisch korrekt an die Laufringe anschmiegen und die von den Laufringen eingeleiteten Kräfte verteilt auf die Wandung von Lagernuten der umschließenden Lagerkonstruktion übertragen, was insgesamt hohe Lagergenauigkeit bei günstiger Flächenkraftverteilung und niedriger Flächenpressung ergibt. Die Futterringe gehören wie die lose in den Laufringbetten liegenden Laufringe, die Wälzkörper und der Wälzkörperkäfig zu dem vom Lagerhersteller als Einbauelement vormontierten Wälzlager, das der Kunde nur in die von ihm leicht in vorgeschriebener Genauigkeit herstellbaren Lagernuten der umschließenden Lagerkonstruktion einzusetzen braucht.

Aus der Druckschrift JP 56-3318A in: Patents Abstr. of Japan ist ein Drahtwälzlager bekannt, bei dem die Futterringe mindestens je eine in Ringrichtung verlaufende Halterung für einen aus Draht bestehenden Federring aufweisen.- Aus der DE-OS 26 25 806 ist ein Drahtwälzlager bekannt, bei dem die Futterringe aus Kunststoff bestehen.

Aus EP 0 157 935 B1 ist ein Drahtwälzlager bekannt, bei dem für einen der Laufringe ein elastischer Futterring mit einer Ringnut vorgesehen ist, in die der Laufring eingesetzt ist. - Bei einem aus der DE-PS 27 29 354 C2 bekannten Drahtkugellager sind die Laufdrähte in offene Nuten der gegeneinander längsverschiebbaren gegenüberliegenden Lagerteile eingesetzt, wobei die Öffnungsweite der Nuten kleiner als der Durchmesser der Laufdrähte gewählt ist, so daß im Querschnitt die Nutwandung die Laufdrähte über mehr als 180° umschließt. - Drahtwälzlager mit radial nach innen oder außen elastisch vorgespannten Laufringen sind aus DE-PS 37 40 755 C2 bekannt. - Aus ROTHE ERDE, Drahtwälzlager, Druckschrift 1008/89 ist es bekannt, daß Drahtwälzlager Dichtlippen aufweisen, die im zusammengesetzten Lager dem jeweils anderen Lagerring elastisch dichtend anliegen. - Aus der US-PS 33 04 138 ist bei Kuggellagern bekannt, wenigstens einen Lagerring durch einen Stützring zu verstärken, der aus Kunststoff mit Bewehrungseinlagen, wie Verstärkungsfasern, -fäden, -drähten und/oder -geweben bestehen.

Der Erfindung liegt die Aufgabe zugrunde, ein Wälzlager der eingangs genannten Art so auszubilden, daß es zum Zusammenhalt des als Einbauelement vormontierten Lagers keiner besonderen Maßnahmen, insbes. keiner Verbindungseinrichtungen und keiner Vorspannung an den Futterringen bedarf.

Diese Aufgabe wird nach der Erfindung dadurch gelöst, daß die Futterringe aus an ihren Enden, gegebenenfalls in einem schmalen Toleranzspalt, zusammenstoßenden Kunststoffleisten bestehen, und daß der Stoß des Federrings gegenüber dem Stoß des Futterrings in Ringumfangsrichtung so weit versetzt ist und der Federring und der Futterring in der Halterung so miteinander im Kraftschluß stehen, daß sich der Federring und der Futterring über die zwischen ihnen wirksamen Tangentialkräfte gegenseitig in der geschlossenen Ringform halten.

Die aus thermoplastischem Kunststoff, wie z. B. Polyamiden mit oder ohne Glasfaserverstärkung oder auch aus Elastomeren wie z. B. Acrylat-Kautschuk bestehenden Futterleisten können in laufender Länge als gerade Profile leicht mit hoher Profilgenauigkeit hergestellt und in der erforderlichen Stücklänge zum offenen Ring gebogen werden. Ihre dabei etwa auftretende Rückfederung wird durch den in die Halterung an der Futterleiste eingesetzten offenen Federring aufgenommen, indem sich der Futterring und der Federring über die zwischen ihnen bestehenden tangentialen Kräfte gegenseitig in der geschlossenen Ringform halten, so daß das vormontierte Lager nicht auseinander fallen kann. Der Federring sorgt dabei im übrigen auch für die Einhaltung der Kreisform des vormontierten Einbauelements.

In bevorzugter Ausführungsform ist der Drahtquerschnitt des Federrings von der Halterung so umschlossen und elastisch fest umspannt, daß die Tangentialkräfte, mittels deren sich der Federring und der Futterring gegenseitig in der geschlossenen Ringform halten, durch die zwischen dem Federring und dem Futterring bestehenden Reibungskräfte gebildet sind. Der Federring und die ihn aufnehmende Halterung können an ihren einander anliegenden Flächen mit einer den tangentialen Kraftschluß fördernden Oberflächenprofilierung, wie einem Rillen- oder Riffellmuster, versehen sein. Auch empfiehlt es sich, daß die Futterringe an ihren äußeren axialen Ringflächen eine Stirnverzahnung, besonders in Form einer Hirth-Verzahnung, aufweisen, um in Umfangsrichtung eine gute Haftung der Futterringe in den Lagernuten und in axialer Richtung eine geringe, für die Lagereinstellung u. U. vorteilhafte Nachgiebigkeit des Futterrings zu erhalten.

In einer besonders bevorzugten Ausführungsform ist die Halterung von einer Ringnut im Futterring gebildet, deren Wandung den in die Ringnut eingeklemmten Federring mit elastischer Andruckkraft umgreift und in zur Lagerachse radialer Richtung formschlüssig in der Ringnut fixiert.

Die Halterung und der Federring können zusätzlich zu den Laufringbetten und Laufringen vorgesehen sein. Ist aber die Halterung als Ringnut ausgebildet, so ist eine besonders vorteilhafte Ausführungsform dadurch gekennzeichnet, daß die Ringnut von einem der Laufringbetten und der Federring von dem in diesem Laufringbett befindlichen Laufring gebildet ist.

Der Federring kann bei einem Axiallager radial nach innen und bei einem Radiallager an dem im Lager radial außen liegenden Futterring radial nach innen, an dem radial innen liegenden Futterring radial nach außen vorgespannt sein.

Im einzelnen empfiehlt sich bei radialer Lagerteilung als besonders zweckmäßige Ausführungsform, daß die Futterringe zwei mit Abstand nebeneinander angeordnete Seitennuten sowie eine dazwischen liegende Mittelnut aufweisen und an beiden Seitennuten mit axial außen liegenden Wandteilen den Nutquerschnitt in Richtung zur Mittelebene des Futterrings hin übergreifen, wobei die Mittelnut als Laufringbett und die Seitennuten sowohl als Laufringbett als auch als Ringnut für einen der Federringe ausgebildet sind. Ohne Änderung des Futterleistenprofils können dann allein durch Einsetzen der geeigneten Lauf- bzw. Federringe in die verschiedenen Nuten der Futterringe Rillenkugellager, Schrägkugellager, Vierpunktkugellager, Kreuzrollenlager usw. verwirklicht werden. Das wird besonders einfach dann erreicht, wenn nach weiterem Vorschlag der Erfindung im zusammengesetzten Lager die Seitennuten und die Mittelnuten beider Futterringe sich in Bezug auf die Wälzkörper jeweils diametral gegenüberliegen und ihre Wandungen im Querschnitt je auf einem Kreis verlaufen, der außerhalb der Seitennuten bzw. der Mittelnuten in die Bahn der Wälzkörper hineinragt. Die Wandung der Seitennuten sollte dann deren Querschnitt über einen Zentriwinkel von mehr als 180° umschließen, um den nötigen Formschluß der Federringe in den Seitennuten zu gewährleisten.

In weiterer Ausbildung der Erfindung können die Futterringe seitlich angeformte Dichtlippen aufweisen, die im zusammengesetzten Lager dem jeweils anderen Futterring axial oder radial elastisch dichtend anliegen und das Lagerinnere nach außen abschließen. Die Futterringe können Bewehrungseinlagen, wie Verstärkungsfasern, -fäden und/oder -drähte, aufweisen, damit die Futterringe auch für größere mechanische Belastungen und höhere Betriebstemperaturen geeignet sind.

Im folgenden wird die Erfindung an in der Zeichnung dargestellten Ausführungsbeispielen näher erläutert; es zeigen:
- Fig. 1: einen Querschnitt durch ein Wälzlager in der Ausführungsform als Rillenkugellager,
- Fig. 2: einen Querschnitt durch ein Wälzlager in der Ausführungsform als Vierpunktkugellager,
- Fig. 3: in der Teilfigur 3a eine Seitenansicht des Lagers nach Fig. 2 und in der Teilfigur 3b eine Axialansicht, teilsweise im Schnitt,
- Fig. 4: einen Querschnitt durch ein Wälzlager in der Ausführungsform als Schrägkugellager,
- Fig. 5: einen Querschnitt durch ein Wälzlager in der Ausführungsform als Kreuzrollenlager,
- Fig. 6: einen Querschnitt durch die Futterleisten der Wälzlager nach den Fig. 1 bis 5 mit in den Teilfiguren 6a und 6b gezeigten Teilansichten in Richtung der in Fig. 6 eingetragenen Pfeile VIa und VIb,
- Fig. 7 bis 10: weitere Ausführungsformen von Wälzlagern jeweils im Querschnitt.

Die in der Zeichnung dargestellten Wälzlager mit jeweils bei 7 angedeuteter Lagerachse sind Radiallager, bei welchen sich die in einem Käfig 3 gehaltenen Wälzkörper 1 an Laufbahnen 2 abwälzen, die an je in einem Laufringbett 4 liegenden Laufringen 5 ausgebildet sind. Die Laufringe 5 bestehen aus an ihren Enden, gegebenenfalls in einem schmalen Toleranzspalt, zusammenstoßenden Laufdrähten. Die Laufringbetten 4 sind an beidseits der Lagerteilung angeordneten Futterringen 6 ausgebildet, die im eingebauten Lagerzustand in Lagernuten eingefügt sind, welche sich in in der Zeichnung nicht dargestellten, durch das Lager drehbar gegeneinander geführten und abgestützten Konstruktionsteilen befinden, welche die umgebende Lagerkonstruktion bilden. Die Futterringe 6 sind dabei radial und axial an der Wandung dieser Lagernuten abgestützt, so daß von den Futterringen 6 die in sie aus den Laufringen 5 eingeleiteten Belastungen großflächig auf die Wandung der Lagernuten übertragen werden.

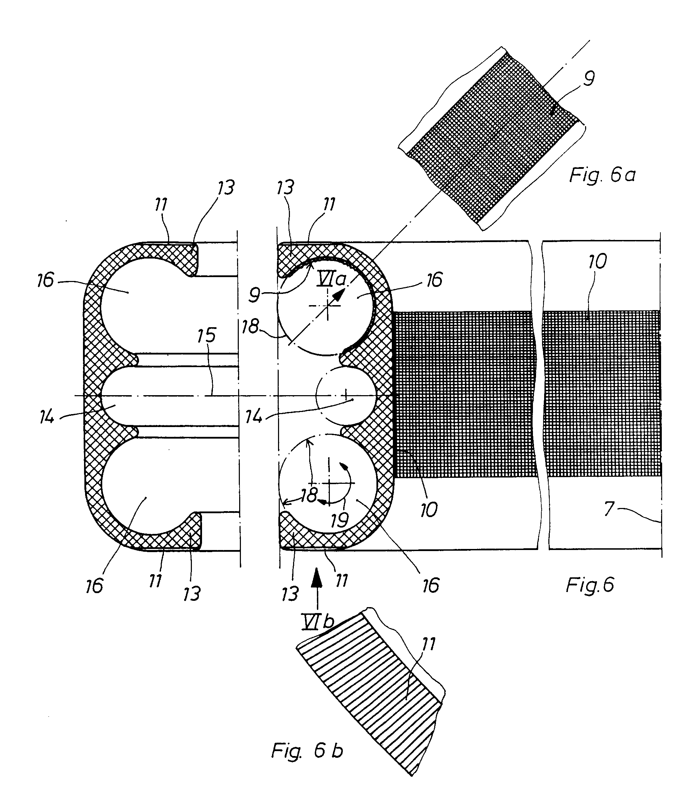

Die Futterringe 6 bestehen aus an ihren Enden, gegebenenfalls wiederum in einem schmalen Toleranzspalt, zusammenstoßenden Kunststoffleisten aus beispielsweise thermoplastischen bzw. duroplastischen Kunststoffen oder Elastomeren und besitzen mindestens je eine in Ringrichtung verlaufende Halterung für einen aus Stahldraht bestehenden und umfangsmäßig ebenfalls in einem Stoß offenen Federring 8 aus gehärtetem Stahldraht. Der Federring 8 sitzt in zur Lagerachse 7 radialer Richtung formschlüssig in der Halterung, so daß sich der Futterring 6 nicht selbsttätig vom Federring 8 lösen kann. Der Stoß des Federrings 8 ist gegenüber dem Stoß des Futterrings 6 in Ringumfangsrichtung versetzt. Außerdem stehen der Federring 8 und der Futterring 6 in der Halterung miteinander im Kraftschluß, so daß dieser Kraftschluß in Verbindung mit der Stoßversetzung zur Folge hat, daß sich der Federring 8 und der Futterring 6 über die zwischen ihnen wirksamen Tangentialkräfte gegenseitig in der geschlossenen Ringform halten. Im wesentlichen erteilt der Federring 8 dabei dem Verbundring aus Futterring 6 und Federring 8 die Kreisform. In den Ausführungsbeispielen ist der Drahtquerschnitt des Federrings 8 von der Halterung jeweils so weit umschlossen und elastisch fest umspannt, daß die Tangentialkräfte, mittels deren sich der Federring 8 und der Futterring 6 gegenseitig in der geschlossenen Ringform halten, durch die zwischen dem Federring 8 und dem Futterring 6 bestehenden Reibungskräfte gebildet sind. Federring 8 und Halterung des Futterrings 6 können daher im Prinzip in Umfangsrichtung glattflächig ohne Profilierungen ausgebildet sein. Es besteht jedoch zur Verbesserung der gegenseitigen Haftung auch die Möglichkeit, daß der Federring 8 und die ihn aufnehmende Halterung an ihren einander anliegenden Flächen mit einer den tangentialen Kraftschluß fördernden Oberflächenprofilierung 9, wie einem Rillen- oder Riffelmuster, wie es die Fig. 6 in Verbindung mit Fig. 6a zeigt, versehen sind. Außerdem können, wie die Fig. 6 in Verbindung mit der Fig. 6b zeigt, die Futterringe 6 an ihren äußeren axialen und radialen Ringflächen je eine Oberflächenprofilierung, wie eine Riffelung 10 bzw. die in Fig. 6b gezeigte Stirnverzahnung 11 in Form einer Hirth-Verzahnung aufweisen. In beiden Fällen sorgen diese Oberflächenprofilierungen 10, 11 für eine verbesserte Haftung der Futterringe 6 in Umfangsrichtung in den nicht dargestellten Lagernuten, während die Stirnverzahnung 11 den Futterringen 6 in axialer Richtung auch eine gewisse Nachgiebigkeit vermittelt, die im Zusammenhang mit der Lagereinstellung von Vorteil sein kann.

In allen Ausführungsbeispielen ist die Halterung von einer Ringnut 12 im Futterring 6 gebildet. Die Wandung umgreift den in die Ringnut 12 eingeklemmten Federring 8 mit elastischer Andruckkraft und fixiert den Federring 8 in zur Lagerachse 7 radialer Richtung formschlüssig in der Ringnut 12. Um also den Federring 8 in die Ringnut 12 einsetzen zu können, bedarf es eines Kraftaufwandes beim Eindrücken des Federrings 8 in die Ringnut, um dabei die den Federring 8 umgreifenden Wandteile des Futterrings 6 vorübergehend aufzuspreizen. Ist der Federring 8 in die Ringnut 12 eingeklemmt, können sich Federring 8 und Futterring 6 nicht mehr selbsttätig voneinander lösen. Eine Lösung beider Ringe 6, 8 voneinander ist nur möglich, wenn die den Federring 8 umspannenden Wandteile 13 des Futterrings 6 absichtlich so verbogen werden, daß sich die Ringnut 12 für den Austritt des Federrings 8 ausreichend weit öffnet.

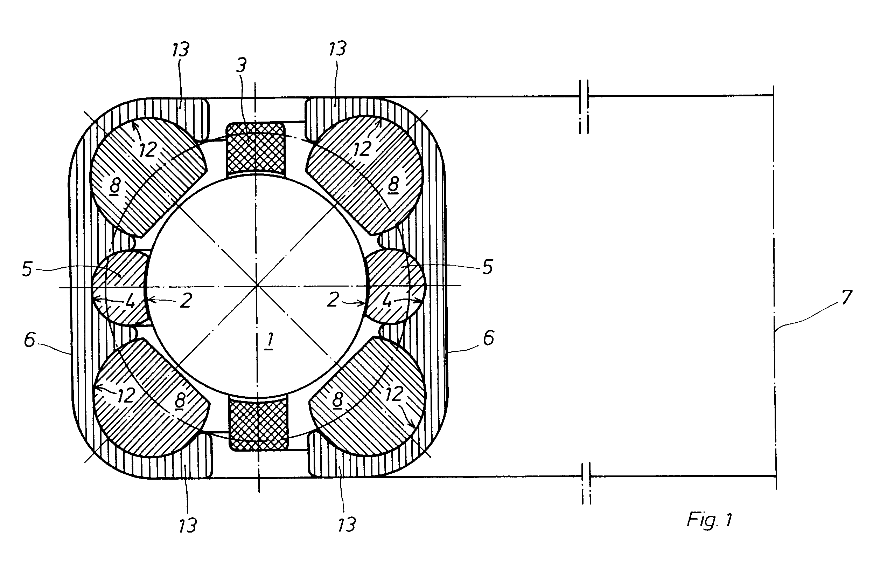

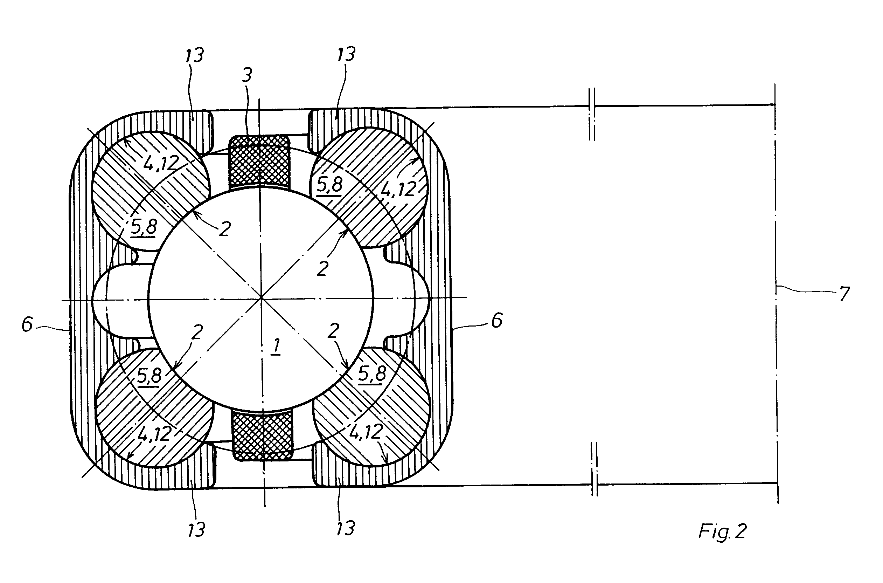

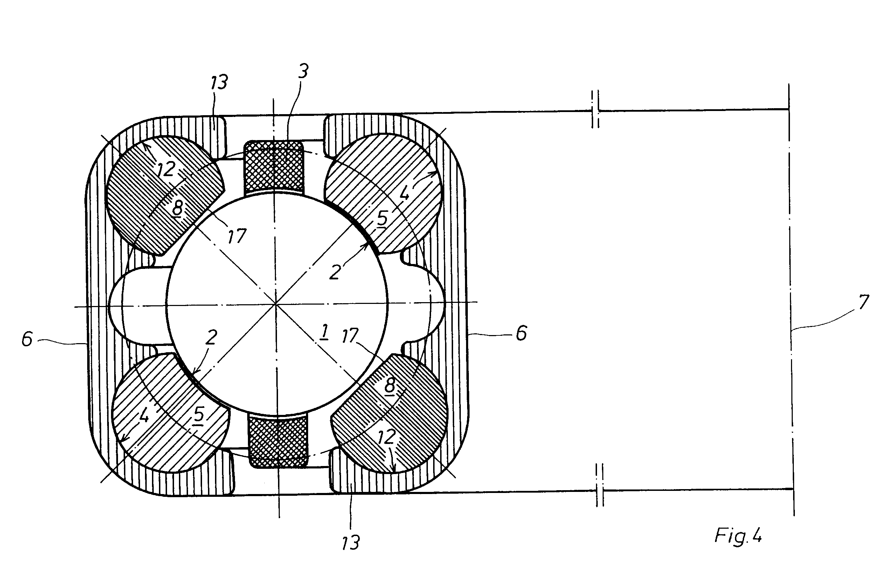

Der Federring 8 und die Ringnut 12 können zusätzlich zu den Laufringen 5 und Laufbetten 4 vorgesehen sein, wie dies die Fig. 1 und 4 zeigen. In Fig. 1 bilden die beiden Laufringe 5 ein Rillenkugellager, während die in jedem Futterring 6 doppelt vorgesehenen Federringe 8 die kreisförmige Ringform der Futterringe 6 und den Zusammenhalt des als Einbauelement vormontierten Lagers gewährleisten. Fig. 4 zeigt den Fall eines Schrägkugellagers mit jeweils einem Laufring 5 und einem Federring 8 je Futterring 6. Es besteht aber auch die Möglichkeit, daß die Ringnut 12 von einem der Laufringbetten 4 und der Federring 8 von dem in diesem Laufringbett 4 befindlichen Laufring 5 gebildet ist. Derartige Fälle sind beispielsweise in den Fig. 2, 5 und 7 bis 10 dargestellt. Im einzelnen sind dabei, wie auch in Fig. 1, die Futterringe 6 gemäß Fig. 6 mit je zwei im Abstand nebeneinander angeordneten Seitennuten 16 sowie mit einer dazwischen liegenden Mittelnut 14 versehen. An allen Seitennuten 16 ist der Nutquerschnitt mit axial außen liegenden Wandteilen 13 in Richtung zur Mittelebene 15 des Futterringes 6 hin übergriffen, um den radialen Formschluß in die Seitennuten 16 eingelegter Drahtringe 5, 8 zu gewährleisten. Die Seitennuten 16 sind daher sowohl als Laufringbett 4 für Laufringe 5 als auch als Ringnut 12 für Federringe 8 geeignet. Die Mittelnut 14 besitzt keine vergleichbaren Formhinterschneidungen des Nutquerschnitts, so daß die Mittelnut 14 nur als Laufringbett 4 bei einem Rillenkugellager gemäß Fig. 1 geeignet ist.

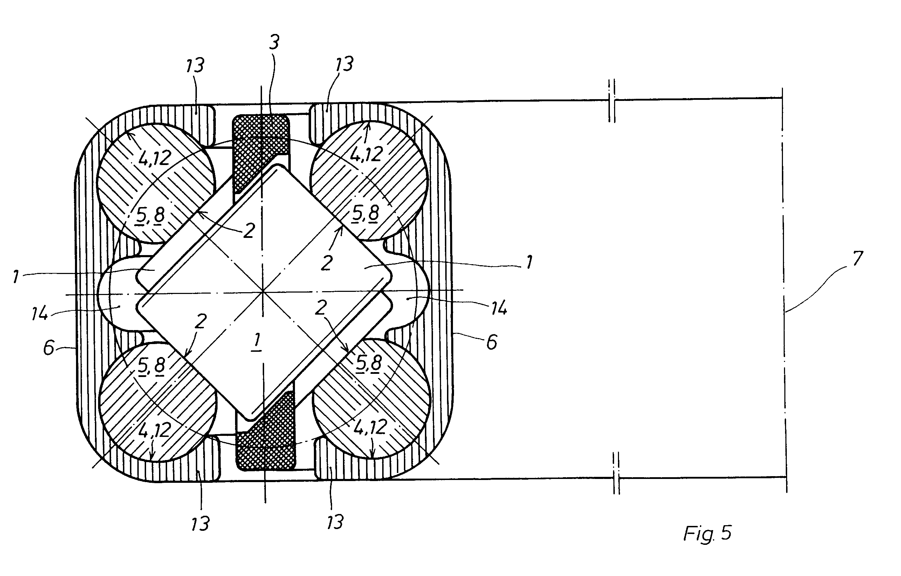

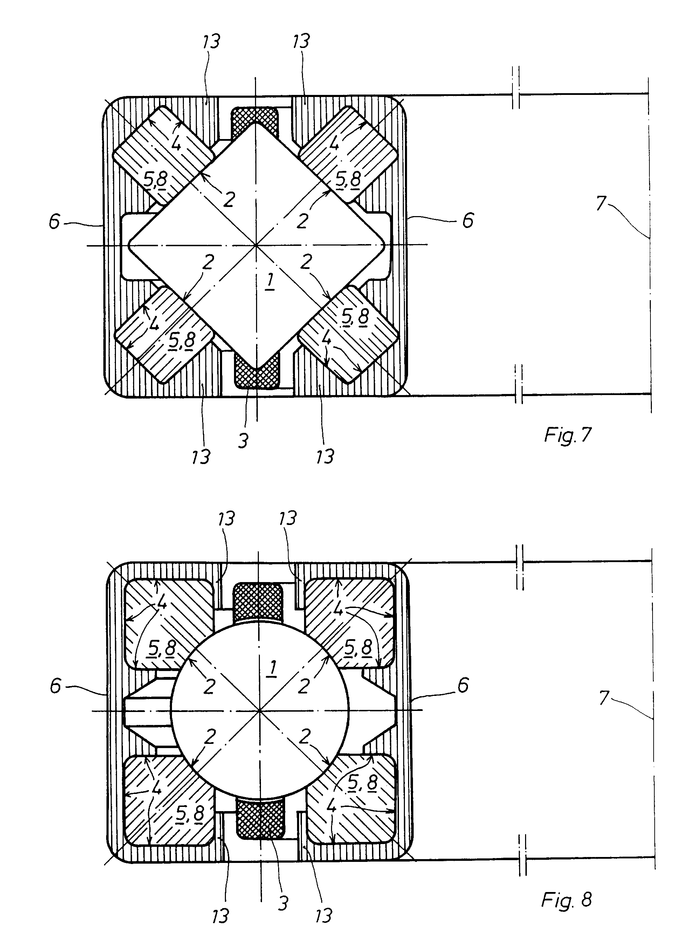

In Fig. 2 bilden alle vier Laufringe 5 zugleich die den Lagerzusammenhalt bewirkenden Federringe 8, so daß alle vier Drahtringe 5, 8 mit Laufflächen 2 für die Wälzkörper 1 ausgestattet sind. Im Fall des Schräglagers nach Fig. 4 sind nur zwei Laufringe 5 mit Laufflächen 2 in den Seitennuten 16 angeordnet, während in den jeweils anderen beiden Seitennuten Federringe 8 sitzen, deren den Wälzkörpern 1 zugewandte Sekantenflächen 17 mit den Wälzkörpern 1 nicht in Berührung kommen. Fig. 5 zeigt den Fall eines Kreuzrollenlagers, wo wiederum in allen vier Seitennuten 16 sowohl die Laufringe 5 mit Laufflächen 2 als auch die Federringe 8 bildende Drahtringe angeordnet sind. Immer liegen sich dabei im zusammengesetzten Lager die Seitennuten 16 und die Mittelnuten 14 beider Futterringe 6 in Bezug auf die Wälzkörper 1 jeweils paarweise diametral gegenüber. Die Wandungen dieser Seiten- und Mittelnuten 14, 16 verlaufen im Querschnitt je auf einem Kreis 18, der außerhalb der Seitennuten 16 bzw. der Mittelnut 14 in die Bahn der wälzkörper 1 hineinragt, so daß an den in die Seiten- bzw. Mittelnuten 16, 14 eingesetzten Drahtringen 5, 8 entweder die Lauffläche 2 oder die mit den Wälzkörpern 1 nicht in Berührung kommenden Sekantenflächen 17 ausgebildet werden können. Jedoch ist die im wesentlichen kreisförmige Querschnittsform der Seitennuten 16 bzw. Lauf- und Federringe 5, 8 nicht unbedingt erforderlich. So zeigen die Fig. 7 und 8 Laufringe 5 und zugeordnete Seitennuten 16 mit beispielsweise im wesentlichen rechteckigem Drahtquerschnitt. In gleicher Weise können selbstverständlich auch die Federringe 8 ausgebildet sein, was in der Zeichnung aber im einzelnen nicht dargestellt ist. Soweit aber der Querschnitt der Seitennuten 16 im wesentlichen kreisförmig ist, umschließt die Wandung der Seitennuten den Nutquerschnitt über einen Zentriwinkel 19 von mehr als 180°, wie dies die Fig. 6 zeigt.

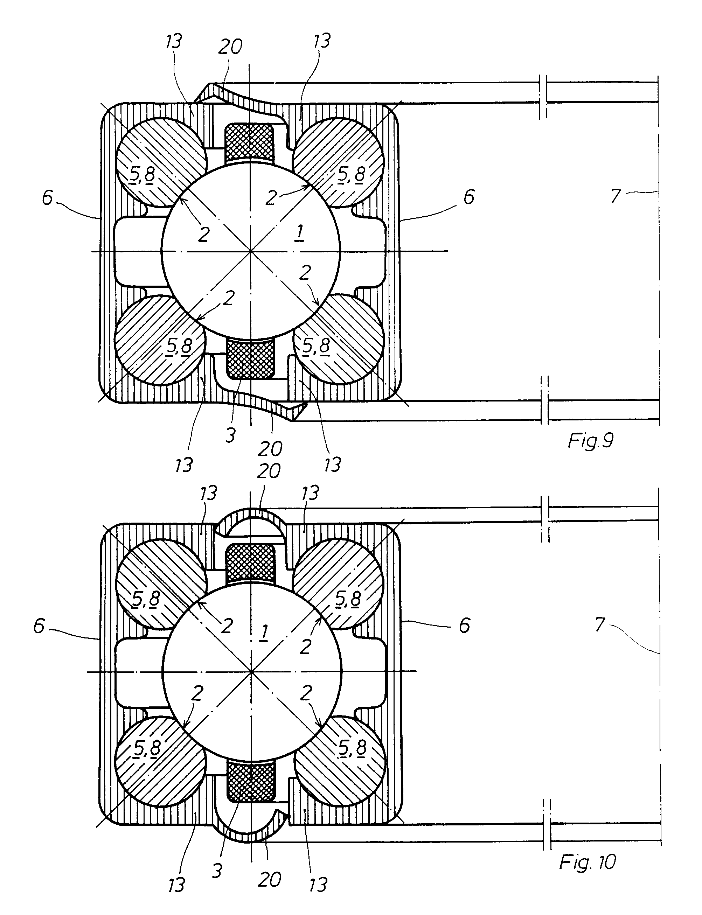

Die Futterringe 6 aus Kunststoff können seitlich angeformte Dichtlippen 20 aufweisen, die entsprechend den Fig. 9 und 10 im zusammengesetzten Lager dem jeweils anderen Futterring axial (Fig. 9) oder radial (Fig. 10) elastisch dichtend anliegen und das Lagerinnere nach außen abdichten.

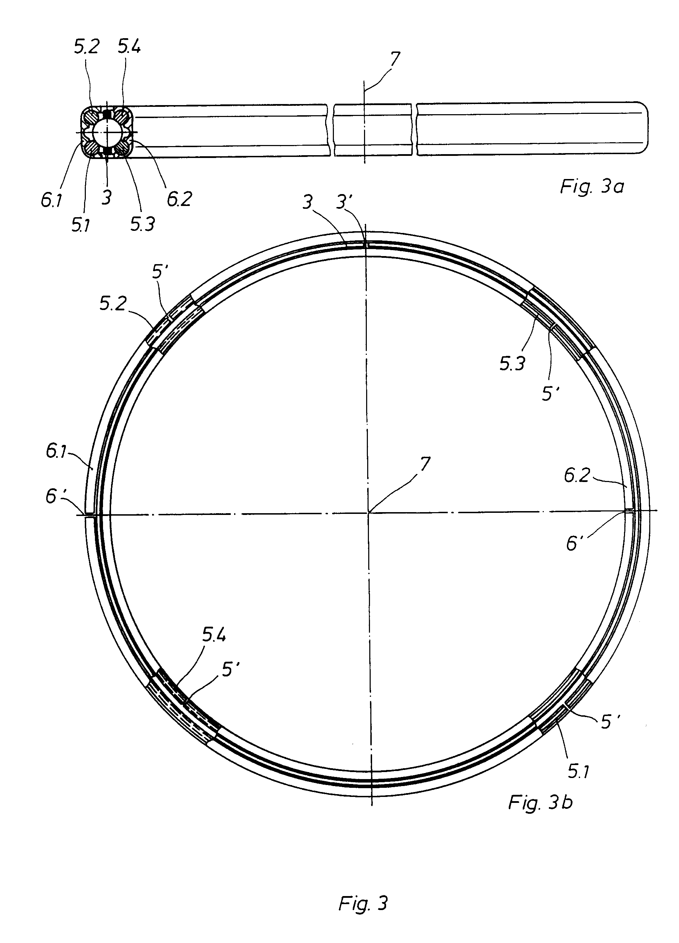

Zur Erläuterung der Lage der Ringstöße wird auf Fig. 3b Bezug genommen. Die Stöße 6' der Futterringe 6.1, 6.2 liegen sich diametral gegenüber. Die Stöße 5' der Laufringe 5.1, 5.2, 5.3 und 5.4 sind demgegenüber um 45° und gegeneinander um jeweils 90° versetzt. Der Stoß 3' des Käfigringes 3 ist gegenüber den Stößen 6' um 90° und den Stößen 5' der Laufringe 5.2, 5.3 um je 45° versetzt. An keiner Stelle des Ringumfanges tritt eine doppelte Stoßfuge auf. Der Abstand zwischen den Stoßfugen 5' und 6' mit jeweils 45° reicht aus, einen nennenswerten Tangentialschlupf zwischen den Futterringen 6.1, 6.2 und den zugleich die Federringe bildenden Laufringen 5.1, 5.2, 5.3, 5.4 zu verhindern.

## Patentansprüche

1. Wälzlager als Radial- und/oder Axiallager, bei dem die Wälzkörper (1) sich an Laufbahnen (2) abwälzen, die an je in einem Laufringbett (4) liegenden Laufringen (5) ausgebildet sind, welche aus an ihren Enden, gegebenenfalls in einem schmalen Toleranzspalt, zusammenstoßenden Laufdrähten bestehen und welche in Lagernuten beidseits der Lagerteilung angeordnet werden können, und wobei aus Kunststoff bestehende Futterringe (6) vorgesehen sind, die in Lagernuten zwischen den Laufringen (5) und der Nutwandung legbar sind, die radial und axial an der Wandung der Lagernuten abstützbar sind, die an ihrer den Laufringen (5) zugewandten Seite mit den Laufringbetten (4) versehen sind und mindestens je eine in Ringrichtung verlaufende Halterung für einen aus Draht bestehenden und umfangsmäßig ebenfalls in einem Stoß offenen Federring (8) aufweisen, der in zur Lagerachse (7) radialer Richtung formschlüssig in der Halterung sitzt, dadurch gekennzeichnet, daß die Futterringe (6) aus an ihren Enden, gegebenenfalls in einem schmalen Toleranzspalt, zusammenstoßenden Kunstsstoffleisten bestehen, und daß der Stoß des Federrings (8) gegenüber dem Stoß des Futterrings (6) in Ringumfangsrichtung so weit versetzt ist und der Federring (8) und der Futterring (6) in der Halterung so miteinander im Kraftschluß stehen, daß sich der Federring (8) und der Futterring (6) über die zwischen ihnen wirksamen Tangentialkräfte gegenseitig in der geschlossenen Ringform halten.

2. Wälzlager nach Anspruch 1, dadurch gekennzeichnet, daß der Drahtquerschnitt des Federrings (8) von der Halterung so umschlossen und elastisch fest umspannt ist, daß die Tangentialkräfte, mittels deren sich der Federring (8) und der Futterring (6) gegenseitig in der geschlossenen Ringform halten, durch die zwischen dem Federring (8) und dem Futterring (6) bestehenden Reibungskräfte gebildet sind.

3. Wälzlager nach Anspruch 1 oder 2, dadurch gekennzeichnet, daß der Federring (8) und die ihn aufnehmende Halterung an ihren einander anliegenden Flächen mit einer den tangentialen Kraftschluß fördernden Oberflächenprofilierung (9), wie einem Rillen- oder Riffelmuster versehen sind.

4. Wälzlager nach einem der Ansprüche 1 bis 3, dadurch gekennzeichnet, daß die Futterringe (6) an ihren äußeren axialen und radialen Ringflächen eine Stirnverzahnung (11), besonders in Form einer Hirth-Verzahnung, aufweisen.

5. Wälzlager nach einem der Ansprüche 1 bis 4, dadurch gekennzeichnet, daß die Halterung von einer Ringnut (12) im Futterring (6) gebildet ist, deren Wandung den in die Ringnut (12) eingeklemmten Federring (8) mit elastischer Andruckkraft umgreift und in zur Lagerachse (7) radialer Richtung formschlüssig in der Ringnut fixiert.

6. Wälzlager nach Anspruch 5, dadurch gekennzeichnet, daß die Ringnut (12) von einem der Laufringbetten (4) und der Federring (8) von dem in diesem Laufringbett (4) befindlichen Laufring (5) gebildet ist.

7. Wälzlager nach einem der Ansprüche 1 bis 6, dadurch gekennzeichnet, daß der Federrring (8) bei einem Axiallager radial nach innen und bei einem Radiallager an dem im Lager radial außen liegenden Futterring radial nach innen, an dem radial innen liegenden Futterring radial nach außen vorgespannt ist.

8. Wälzlager nach Anspruch 5 oder 6, dadurch gekennzeichnet, daß bei radialer Lagerteilung die Futterringe (6) zwei mit Abstand nebeneinander angeordnete Seitennuten (16) sowie eine dazwischen liegende Mittelnut (14) aufweisen und an beiden Seitenuten (16) mit axial außen liegenden Wandteilen (13) den Nutquerschnitt in Richtung zur Mittelebene (15) des Futterrings (6) hin übergreifen, wobei die Mittelnut (14) als Laufringbett (4) und die Seitennuten (16) sowohl als Laufringbett (4) als auch als Ringnut (12) für einen der Federringe (8) ausgebildet sind.

9. Wälzlager nach Anspruch 8, dadurch gekennzeichnet, daß im zusammengesetzten Lager die Seitennuten (16) und die Mittelnuten (14) beider Futterringe (6) sich in Bezug auf die Wälzkörper (1) jeweils diametral gegenüber liegen und ihre Wandungen im Querschnitt je auf einem Kreis (18) verlaufen, der außerhalb der Seitennuten (16) bzw. der Mittelnut (14) in die Bahn der Wälzkörper (1) hineinragt.

10. Wälzlager nach Anspruch 9, dadurch gekennzeichnet, daß die Wandung der Seitennuten (16) deren Querschnitt über einen Zentriwinkel (19) von mehr als 180° umschließt.

11. Wälzlager nach einem der Ansprüche 1 bis 10, dadurch gekennzeichnet, daß die Futterringe (6) seitlich angeformte Dichtlippen (20) aufweisen, die im zusammengesetzten Lager dem jeweils anderen Futterring axial oder radial elastisch dichtend anliegen.

12. Wälzlager nach einem der Ansprüche 1 bis 11, dadurch gekennzeichnet, daß die Futterringe (6) Bewehrungseinlagen, wie Verstärkungsfasern, -fäden und/oder -drähte, aufweisen.

## Claims

1. A rolling bearing as a radial and/or thrust bearing, in which the rolling bodies (1) roll on raceways (2) which are provided on races (5) which are each disposed in a race bed (4) and which comprise race wires which bet at their ends, possibly at a narrow tolerance gap, which races can be arranged in bearing grooves on both sides of the bearing division, and wherein there are provided mounting rings (6) which comprise plastics material and which can be fitted in bearing grooves between the races (5) and the groove wall, which can be supported radially and axially against the wall of the bearing grooves, which at their sides towards the races (5) are provided with the race beds (4) and which have at least one respective holder extending in the race direction for a spring ring (8) which comprises wire and which is also open in respect of its periphery at a gap, which spring ring is positively lockingly carried in the holder in a direction which is radial relative to the bearing axis (7), characterised in that the mounting rings (6) comprise plastics strips which bet at their ends, possibly at a narrow tolerance gap, and that the gap of the spring ring (8) is displaced relative to the gap of the mounting ring (6) in the peripheral direction of the ring to such an extent and the spring ring (8) and the mounting ring (6) are force-lockingly connected together in the holder in such a way that the spring ring (8) and the mounting ring (6) hold each other mutually in the closed ring shape by way of the tangential forces which are operative between them.

2. A rolling bearing according to claim 1 characterised in that the wire cross-section of the spring ring (8) is so enclosed by the holder and elastically firmly embraced that the tangential forces by means of which the spring ring (8) and the mounting ring (6) hold each other mutually in the closed ring form are formed by the frictional forces between the spring ring (8) and the mounting ring (6).

3. A rolling bearing according to claim 1 or claim 2 characterised in that the spring ring (8) and the holder carrying it are provided at their surfaces which bear against each other with a surface profiling (9) for promoting the tangential force engagement, such as a groove or serration pattern.

4. A rolling bearing according to one of claims 1 to 3 characterised in that at their outer axial and radial ring surfaces the mounting rings (6) have a face tooth arrangement (11), in particular in the form of a Hirth-type tooth arrangement.

5. A rolling bearing according to one of claims 1 to 4 characterised in that the holder is formed by an annular groove (12) in the mounting ring (6), the wall of which groove embraces with an elastic pressure force the spring ring (8) clamped in the annular groove (12), and fixes it in positively locking relationship in the annular groove in a radial direction relative to the bearing axis (7).

6. A rolling bearing according to claim 5 characterised in that the annular groove (12) is formed by one of the race beds (4) and the spring ring (8) is formed by the race (5) disposed in said race bed (4).

7. A rolling bearing according to one of claims 1 to 6 characterised in that in a thrust bearing the spring ring (8) is biased radially inwardly and in a radial bearing it is biased radially in wardly at the mounting ring which is disposed radially outwardly in the bearing and radially outwardly at the mounting ring which is disposed radially inwardly.

8. A rolling bearing according to claim 5 or claim 6 characterised in that in the case of radial bearing division the mounting rings (6) have two side grooves (16) arranged at a spacing in side-by-side relationship and a central groove (14) disposed therebetween and at both side grooves (16) engage with axially outwardly disposed wall portions (13) over the groove cross-section in a direction towards the central plane (15) of the mounting ring (6), wherein the central groove (14) is formed as a race bed (4) and the side grooves (16) are formed both as a race bed (4) and also as an annular groove (12) for one of the spring rings (8).

9. A rolling bearing according to claim 8 characterised in that in the assembled bearing the side grooves (16) and the central grooves (14) of both mounting rings (6) are respectively disposed in diametrally opposite relationship in relation to the rolling bodies (1) and their walls extend in cross-section on a respective circle (18) which projects into the path of the rolling bodies (1) outside the side grooves (16) or the central groove (14).

10. A rolling bearing according to claim 9 characterised in that the wall of the side grooves (16) encloses the cross-section thereof over an angle at the centre (19) of more than 180°.

11. A rolling bearing according to one of claims 1 to 10 characterised in that the mounting rings (6) have sealing lips (20) which are formed laterally thereon and which in the assembled bearing bear axially or radially elastically sealingly against the respective other mounting ring.

12. A rolling bearing according to one of claims 1 to 11 characterised in that the mounting rings (6) have reinforcing inserts such as reinforcing fibres, threads and/or wires.

## Revendications

1. Palier à contact de roulement servant de palier radial et/ou de butée, dans lequel les corps roulants (1) roulent sur des surfaces de roulement (2) qui sont conformées sur des bagues de roulement (5) situées respectivement dans une gorge de bague de roulement (4), et constituées par des fils de roulement dont les extrémités sont aboutées, éventuellement dans une étroite fente de tolérance, et qui peuvent être disposées dans des encoches de palier de part et d'autre de la division de palier, et dans lequel sont prévues des bagues de protection (6) en matière plastique qui peuvent être insérées dans des encoches de palier, entre les bagues de roulement (5) et la paroi des encoches, et prendre radialement et axialement appui sur la paroi des encoches de palier, et qui comportent les gorges de bagues de roulement (4) sur le côté tourné vers les bagues de roulement (5), et présentent au moins respectivement une fixation annulaire pour une rondelle élastique (8) conformée en fil et également ouverte, dans le sens circonférentiel, dans une jointure, laquelle rondelle élastique est logée, radialement à l'axe (7) du palier, à engagement positif dans la fixation, **caractérisé par le fait** que les bagues de protection (6) sont constituées par des baguettes en matière plastique dont les extrémités sont aboutées, éventuellement avec une étroite fente de tolérance, que la jointure de la rondelle élastique (8) est décalée par rapport à la jointure de la bague de protection (6) dans le sens de la circonférence de la bague, et que la rondelle élastique (8) et la bague de protection (6) sont bloquées mutuellement par adhérence dans la fixation, de telle façon que la rondelle élastique (8) et la bague de protection (6) se maintiennent mutuellement dans la forme d'anneau fermé par l'intermédiaire des forces tangentielles agissant entre elles.

2. Palier à contact de roulement selon la revendication 1, caractérisé par le fait que la fixation enveloppe et enserre solidement et de manière élastique la section de fil de la rondelle élastique (8), de telle sorte que les forces tangentielles au moyen desquelles la rondelle élastique (8) et la bague de protection (6) se maintiennent mutuellement dans la forme d'anneau fermé, sont constituées par des forces de friction agissant entre la rondelle élastique (8) et la bague de protection (6).

3. Palier à contact de roulement selon l'une des revendications 1 ou 2, caractérisé par le fait que la rondelle élastique (8) et la fixation qui la reçoit présentent sur leurs surfaces appliquées les unes contre les autres, un profil de surface (9) avec un dessin rainuré ou cannelé.

4. Palier à contact de roulement selon l'une des revendications 1 à 3, caractérisé par le fait que les bagues de protection (6) présentent sur leurs surfaces annulaires axialement et radialement extérieures une denture droite (11), en particulier sous la forme d'un crantage Hirth.

5. Palier à contact de roulement selon l'une des revendications 1 à 4, caractérisé par le fait que la fixation est constituée par une gorge annulaire (12) dans la bague de protection (6) dont la paroi enveloppe la rondelle élastique (8) enserrée dans la gorge annulaire (12) avec une force de pression élastique et la bloque, radialement à l'axe (7) du palier et à engagement positif, dans la gorge annulaire.

6. Palier à contact de roulement selon la revendication 5, caractérisé par le fait que la gorge annulaire (12) est constituée par l'une des gorges de bagues de roulement (4) et que la rondelle élastique (8) est constituée par la bague de roulement (5) logée dans ladite gorge de bague de roulement (4).

7. Palier à contact de roulement selon l'une des revendications 1 à 6, caractérisé par le fait que, pour un palier de butée, la rondelle élastique (8) est mise en précontrainte radialement vers l'intérieur et, pour un palier radial, radialement vers l'intérieur contre la bague de protection placée radialement à l'extérieur dans le palier, et radialement vers l'extérieur contre la bague de protection placée radialement à l'intérieur.

8. Palier à contact de roulement selon l'une des revendications 5 ou 6, caractérisé par le fait que dans le cas d'une division radiale du palier, les bagues de protection (6) comportent deux gorges latérales (16) disposées à distance l'une à côté de l'autre, ainsi qu'une gorge médiane (14) située entre ces dernières, et que, sur les deux gorges annulaires (16), elles recouvrent la section transversale des gorges en direction du plan médian (15) de la bague de protection (6) avec des éléments de paroi (13) situés axialement à l'extérieur, la gorge médiane (14) étant conformée en gorge de bague de roulement (4) et les gorges latérales (16) formant aussi bien la gorge de bague de roulement (4) qu'une gorge annulaire (12) pour l'une des rondelles élastiques (8).

9. Palier à contact de roulement selon la revendication 8, caractérisé par le fait que dans le palier assemblé, les gorges latérales (16) et les gorges médianes (14) des deux bagues de protection (6) sont respectivement diamétralement opposées par rapport aux corps roulants (1), et que, dans la section transversale, leurs parois s'étendent à chaque fois sur un cercle (18) qui dépasse, à l'extérieur des gorges latérales (16) et respectivement de la gorge médiane (14), dans la trajectoire des corps roulants (1).

10. Palier à contact de roulement selon la revendication 9, caractérisé par le fait que la paroi des gorges latérales (16) enveloppe la section transversale de celles-ci sur un angle au centre (19) de plus de 180°.

11. Palier à contact de roulement selon l'une des revendications 1 à 10, caractérisé par le fait que les bagues de protection (6) présentent des lèvres d'étanchéité (20) conformées latéralement qui, dans le palier assemblé, sont respectivement appliquées élastiquement et de manière étanche contre l'autre bague de protection dans le sens axial ou radial.

12. Palier à contact de roulement selon l'une des revendications 1 à 11, caractérisé par le fait que les bagues de protection (6) comportent des éléments d'armature tels que des fibres, fils et/ou fils métalliques de renforcement.
